# EUROPEAN PATENT SPECIFICATION

(11) **EP 3 918 210 B1**
(45) Date of publication and mention of the grant of the patent: **08.05.2024**
(21) Application number: 19913866.0
(22) Date of filing: 15.03.2019
(51) Int. Cl.: F16B 2/12, E04G 17/04, F16B 2/18

(54) **LOCKING MECHANISM FOR THE PANEL FORMWORK SYSTEMS**
VERRIEGELUNGSMECHANISMUS FÜR PLATTENSCHALUNGSSYSTEME
MÉCANISME DE VERROUILLAGE POUR SYSTÈMES DE COFFRAGE DE PANNEAUX

(30) Priority: 30.01.2019 TR 201901366
(43) Date of publication of application: 08.12.2021
(73) Proprietor: URTIM KALIP VE ISKELE SISTEMLERI SANAYI VE TICARET ANONIM SIRKETI, Arnavutköy/Istanbul (TR)
(72) Inventor: DAL, Cevdet, Hadimköy/Istanbul (TR)
(74) Representative: Latzel, Klaus
(86) International application number: PCT/TR2019/050166
(87) International publication number: WO 2020/159455

(56) References cited:
- EP-A1- 1 870 536
- EP-A2- 1 842 985
- DE-A1- 3 941 937
- DE-A1- 19 540 917
- DE-C2- 4 007 950
- US-A- 4 541 155
- US-A- 5 525 000
- US-A1- 2018 045 337

## Description

The invention relates to locking mechanisms of panel formwork systems used for making curtain wall and column formworks in the construction sector.

The invention particularly relates to locking mechanisms of panel formwork systems comprising specially designed profiles used for making curtain wall and column formworks in the construction sector.

Today, in the locking mechanisms of the panel formwork systems used for the constructions of the curtain wall and column slabs in the construction sector, the profiles are interlocked to connect the frameset boards to each other. The locking process is achieved by the compression of the wedge in the locking mechanism. Compressing or loosening the wedge in this said locking mechanism requires extra power and labor.

In the current technique, the locking mechanism comprises movable and stationary perforated arms and a wedge. The wedge which is passed through the holes on the arms holds the movable and stationary arm of the lock together. The wedge, which is riveted to prevent it from being released from the locking mechanism, prevents the arms from separating from each other. However, the arms held together are not fixed. After the locking mechanism is coupled to the panel formwork system, the wedge is compressed by hammer strokes in the hole on the arms. The arms are fixed by this compression process. The system is then put into the locked position. Compression of the wedge to the system with the use of hammer requires extra power and labor. In addition, if this process is not carried out correctly, both the lock and the system can be damaged.

In another current application, the locking mechanism comprises movable arms and a wedge placed on a profile having a serrated surface. In order to integrate the locking mechanism that locks the system into the system, the wedge must be compressed with hammer strokes. In addition, because of this system is heavier than other existing systems, using of this system becomes difficult.

In current applications, the process of compression of the locking system with a hammer creates a problem in the case of assembly and disassembly. The fact that the compressing and loosening of the wedge through the hammer is difficult, results in the need for extra power and loss of time. In addition, the locking system can be damaged due to the impact of the hammer.

As a result of the literature search on the subject, a patent application no TR2014/10708 that titled "Panel and Fixing System for Panels" is found. In the system of the application, the retaining profiles placed on the narrow sides of the panels are fixed to each other due to the suitability of the structure of the profile opposing them. However, the system does not include a structure that allows moving arms to be interlocked and fixed to each other. Alternative locking mechanisms with movable arms are described in DE 195 40 917 A1 and DE 40 07 950 C2. In these documents, the movable arms are fixed by means of a screw lock.

As a result, due to the above-mentioned drawbacks and the inadequacy of the existing solutions, an improvement in the technical field has been required.

The invention is inspired by the existing circumstances and aims to solve the above-mentioned drawbacks. The locking mchanism of the present invention id defined by the features of the claim.

The main purpose of the invention is to ensure that the locking mechanism of the panel formwork systems comprises specially designed profiles used in the making of curtain wall and column formworks in the construction sector locked without requiring extra power. Another purpose of the invention is to reduce labor and time loss due to the compression of the lock latch in the locking mechanism by means of the easily locking mechanism. Another purpose of the invention is to prevent the product from being deformed by means of the locking mechanism which is easily locked by locking the latch in the locking mechanism.

Another purpose of the invention is to minimize labor costs and achieve high circulation speed in construction sites since there is no need for a different type of locking element besides the lock latch.

The structural and characteristic features and all advantages of the invention outlined in the drawings below and in the detailed description made by referring these figures will be understood clearly, therefore the evaluation should be made by taking these figures and detailed explanation into consideration. The scope of invention is however only defined in the appended claims.

### Brief Description of the Figures

**Figure 1** Shows the locking mechanism according to the invention used in the panel formwork systems in the locked position.
**Figure 2** Shows the locking mechanism according to the invention used in the panel formwork systems as locked with a profile.

### Reference Numbers

- **1.**: Stationary Arm
- **2.**: Moveable Arm
- **3.**: Lock profile
- **4.**: Serrated piece
- **5.**: Latch

### Detailed Description of the Invention

In this detailed description, the preferred structures of the locking mechanism used in panel formwork systems of the invention are described only for a better understanding of the subject.

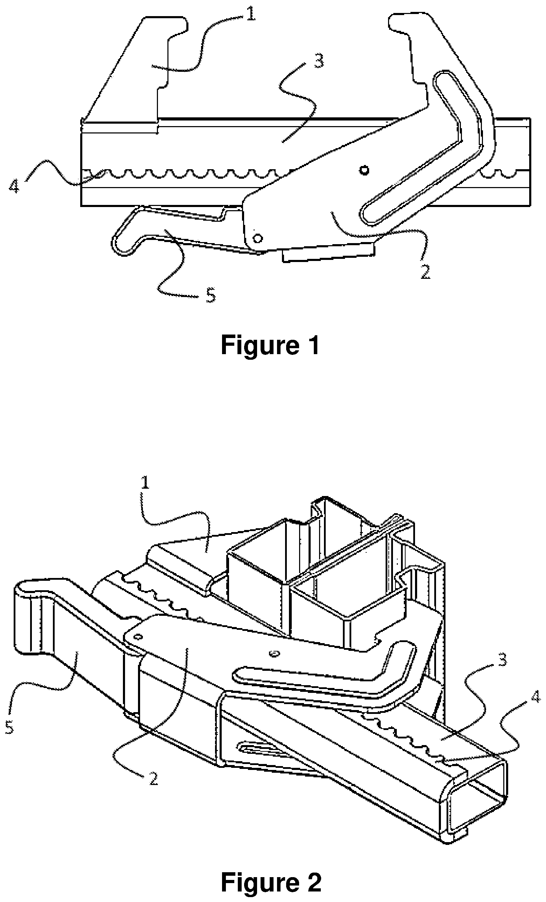

The locking mechanism used in the panel formwork systems of the invention, in its simplest form, as shown in its locked positions in Figure 1 and Figure 2, comprises a stationary arm (1), a movable arm (2), a lock profile (3), a serrated piece (4) and a latch (5).

The stationary arm (1) is positioned on an upper surface and at an end of the lock profile (3). The serrated piece (4) is positioned at a bottom of the lock profile (3), and serrated edges of side surfaces of the serrated piece (4) coincide with side surfaces of the lock profile (3). The movable arm (2) is connected to the side surfaces of the serrated piece (4), as to stand between the serrated piece (4) and the lock profile (3). The locking latch (5) is connected to the movable arm (2) on the non-serrated surface (bottom surface) of the serrated piece (4). This latch (5), by moving axially where is in contact with the movable arm (2), allows the locking and release.

In the construction sector, the locking operation in the panel formwork system used in the curtain wall and column formworks is ensured by the closing of the lock latch (5) towards the bottom surface of the serrated piece (4), where a projection on the movable arm (2) coincides with grooves of the serrated edges on lateral surfaces of the serrated piece (4). Meanwhile, the protrusions at the ends of the movable arm (2) and the stationary arm (1) coincide with the indentations in the profiles, ensuring that the profiles are fixed/locked between the movable arm (2) and the stationary arm (1). Accordingly, the system comprises
- the serrated piece (4) positioned at the bottom surface of the lock profile (3) as the serrated edges coincide with the side surfaces of the lock profile (3),
- the movable arm (2) connected to the side surfaces of the serrated piece (4), as to stand between the serrated piece (4) and the lock profile (3),
- the locking latch (5) which is connected to the movable arm (2) on the bottom surface of the serrated piece (4), wherein the latch is configured to fix the movable arm (2) to the serrated piece (4) by the closing of the latch towards the lower surface of the serrated piece (4), where a projection on the movable arm (2) coincides with the grooves on the lateral surfaces of the serrated piece (4), and ensuring that the profiles are fixed/locked and wherein the protrusions at the ends of the movable arm (2) and the stationary arm (1) coincide with the indentations in the profiles.

The locking mechanism of the invention used in panel formwork systems is used for connecting frameset boards to each other. Profiles are fixed when the stationary arm (1) positioned on the lock profile (3) grips the one profile and the movable arm (2) positioned on the serrated piece (4) on the lock profile (3) grips the other profile. The movable arm (2) can be moved on the serrations on the serrated piece (4) gradually or step by step by means of the protrusions. When the movable arm (2) is positioned on the serrated piece (4), the remaining profiles between the movable arm (2) and the stationary arm (1) are fixed by closing the lock latch (5). This allows the system to be locked by a simple action without requiring extra power.

Due to the locking mechanism used in panel formwork systems, since the fixing of the profiles between the movable arm (2) and the stationary arm (1) is done by means of the locking latch (5) rather than by compressing the latch (5) with the hammer stroke, the power and the labor required are reduced. Furthermore, the system which is locked by clamping the latch (5) is not subject to deformation.

## Claims

1. A locking mechanism for fixing profiles used in panel formwork systems of curtain walls and column formworks wherein the locking mechanism comprises;
∘ a stationary arm (1) positioned on an upper surface and at an end of a lock profile (3),
∘ a serrated piece (4) positioned at a bottom surface of the lock profile (3), wherein serrated edges of side surfaces of the serrated piece (4) coincide with side surfaces of the lock profile (3),
∘ a movable arm (2) connected to the side surfaces of the serrated piece (4), as to stand between the serrated piece (4) and the lock profile (3), and
∘ a latch (5) which is connected to the movable arm (2) on a bottom surface of the serrated piece (4), wherein the latch (5) is configured to fix the movable arm (2) to the serrated piece (4) by closing of the latch (5) towards the bottom surface of the serrated piece (4), where a projection on the moveable arm (2) coincides with grooves of the serrated edges on lateral surfaces of the serrated piece (4), ensuring that the profiles are fixed/locked, wherein protrusions at ends of the movable arm (2) and the stationary arm (1) are adapted to coincide with indentations in the profiles.

## Patentansprüche

1. Verriegelungsmechanismus für die Befestigung von Profilen, die in Rahmenschalungssystemen von Vorhangfassaden und Säulenschalungen eingesetzt werden, wobei der Verriegelungsmechanismus folgendes umfasst;
einen feststehenden Arm (1), der auf einer oberen Fläche und an einem Ende eines Verschlussprofils (3) angeordnet ist
ein gezahntes Teil (4), das an einer unteren Fläche des Verschlussprofils (3) positioniert ist, wobei gezahnte Kanten von Seitenflächen des gezahnten Teils (4) mit Seitenflächen des Verschlussprofils (3) zusammenfallen,
einen beweglichen Arm (2), der mit den Seitenflächen des gezahnten Teils (4) verbunden ist, um zwischen dem gezahnten Teil (4) und dem Verschlussprofil (3) zu stehen, und
einen Riegel (5), der mit dem beweglichen Arm (2) an einer Unteren Fläche des gezahnten Teils (4) verbunden ist, wobei der Riegel (5) so konfiguriert ist, dass er durch Schließen des Riegels (5) in Richtung der unteren Fläche des gezahnten Teils (4) den beweglichen Arm (2) an dem gezahnten Teil (4) fixiert, wobei ein Vorsprung auf dem beweglichen Arm (2) mit Nuten der gezahnten Kanten auf seitlichen Flächen des gezahnten Teils (4) zusammenfällt, wodurch sichergestellt wird, dass die Profile fixiert bzw. verriegelt sind, wobei Vorsprünge an den Enden des beweglichen Arms (2) und des stationären Arms (1) so angepasst sind, dass sie mit Vertiefungen in den Profilen zusammenfallen.

## Revendications

1. Mécanisme de verrouillage pour la fixation des profilés utilisés dans les systèmes de coffrage de panneaux des murs-rideaux et des coffrages de colonnes, le mécanisme de verrouillage comprenant :
un bras fixe (1) positionné sur une surface supérieure et à une extrémité d'un profil du verrou (3),
une pièce dentée (4) positionnée sur une surface inférieure du profil de verrou (3), dans laquelle les bords dentés des surfaces latérales de la pièce dentée (4) coïncident avec les surfaces latérales du profil de verrou (3),
un bras mobile (2) relié aux surfaces latérales de la pièce dentée (4), de manière à s'interposer entre la pièce dentée (4) et le profil de verrou (3), et
un loquet (5) relié au bras mobile (2) sur une surface inférieure de la pièce dentée (4), le loquet (5) étant configuré pour fixer le bras mobile (2) à la pièce dentée (4) en fermant le loquet (5) vers la surface inférieure de la pièce dentée (4), où une saillie sur le bras mobile (2) coïncide avec les rainures des bords dentés sur les surfaces latérales de la pièce dentée (4), garantissant que les profils sont fixés/verrouillés, les saillies aux extrémités du bras mobile (2) et du bras stationnaire (1) étant adaptées pour coïncider avec les indentations dans les profils.
